# EUROPEAN PATENT SPECIFICATION

(11) **EP 3 171 695 B1**
(45) Date of publication and mention of the grant of the patent: **09.10.2024**
(21) Application number: 15824215.6
(22) Date of filing: 01.07.2015
(51) Int. Cl.: A01M 29/06, A01N 59/16, A01N 35/06, A01M 29/12, A01M 29/08

(54) **USE OF VISUAL CUES TO ENHANCE BIRD REPELLENT COMPOSITIONS**
VERWENDUNG VISUELLER HINWEISE ZUR VERBESSERUNG VON VOGELABWEHRZUSAMMENSETZUNGEN
UTILISATION DE REPÈRES VISUELS POUR AMÉLIORER DES COMPOSITIONS REPOUSSANT LES OISEAUX

(30) Priority: 25.07.2014 US 201462028900 P
(43) Date of publication of application: 31.05.2017
(73) Proprietor: Arkion Life Sciences LLC, New Castle, DE 19720 (US); The United States of America, as Represented by the Secretary of Agriculture, Washington, DC 20250 (US)
(72) Inventor: BALLINGER, Kenneth, E., Jr., East Wakefield, NH 03830 (US); WERNER, Scott, John, Wellington, CO 80549 (US)
(74) Representative: Mewburn Ellis LLP
(86) International application number: PCT/US2015/038780
(87) International publication number: WO 2016/014227

(56) References cited:
- WO-A1-2008/123533
- CN-Y- 201 054 947
- JP-A- 2003 310 135
- US-A- 4 919 926
- US-A- 5 885 604
- US-A1- 2002 081 326
- US-A1- 2005 186 237
- US-A1- 2007 190 343
- US-A1- 2011 269 832
- US-A1- 2014 005 246
- US-B1- 6 328 986
- US-B1- 6 328 986
- US-B1- 6 436 423
- SCOTT J. WERNER ET AL: "The role of a generalized ultraviolet cue for blackbird food selection", PHYSIOLOGY AND BEHAVIOR, vol. 106, no. 5, 1 July 2012 (2012-07-01), GB, pages 597 - 601, XP055756594, ISSN: 0031-9384, DOI: 10.1016/j.physbeh.2012.04.007

## Description

### FIELD OF THE TECHNOLOGY

The present disclosure relates to the use of a light absorbent compound or compounds to lower the amount of bird repellent active ingredient required to effectively repel birds from plants. In particular, the disclosure relates to incorporating one or more light absorbent compounds in a bird repellent that uses taste or gut based ingestive consequences.

### BACKGROUND OF THE TECHNOLOGY

Application of effective bird repellents to protect crops ready for harvest and for seedlings exposed to bird loss are important for agriculture. Post ingestive bird repellents have been proven to be an effective way to prevent crop losses to birds. Birds see food sources in known wavelengths of UV light and known repellents absorb light in the appropriate range to be visible by birds as well as repel birds by post ingestional irritation. Scott J. Werner et al. Physiology and Behaviour, vol. 106, no. 5, 1 July 2012, pages 597-601 investigates whether a UV cue and a postingestive repellent can be used to condition food avoidance in red-winged blackbirds.

Known ultraviolet cues can be effective mimics of bird repellents that can also cue birds in the ultraviolet range of 300-400 nm. *See* U.S. patent application 12/652,944. The '944 application describes the implications of lowering the active ingredient concentration of a bird repellent. Achieving a repellency effect with a lower concentration of bird repellent product (i.e., active ingredient) is economically important to agriculture and can increase the safety uses of low concentration products, such as for uses in food or feed.

The '944 application also describes light absorbing compounds in the UVa and UVb range of ultraviolet light, including TiO₂ and other forms of Titanium (IV) compounds, trisiloxanes, siloxanes, etc. The usefulness of these compounds in regards to bird repellency is based on the unique bird behavior of seeing in both the visible and UV range of light. Birds use the UV range to identify food sources and visually determine the timing of the food source for herbivory. The '944 application also discusses synergy between TiO₂ and 9,10 anthraquinone, an active ingredient known to be a bird repellent. The '944 application discloses that the amount of 9,10 anthraquinone needed to achieve effective bird repellency was reduced by 23% (i.e., 1778 ppm to 1370 ppm AQ concentration to achieve 74% repellency).

### SUMMARY OF THE INVENTION

In one aspect, the present invention relates to composition comprising a visual cue agent and a bird repellent, wherein the particle size of the visual cue agent is greater than about 100 nm, wherein the visual cue agent comprises rutile TiO₂, CaCO₃, or a combination thereof; the bird repellent is anthraquinone; and the ratio of visual cue agent to bird repellent is within the range of 1.5:1 to 3:1

In a second aspect, the present invention relates to the use of the composition in a method of enhancing bird repellency.

### BRIEF DESCRIPTION OF THE DRAWINGS

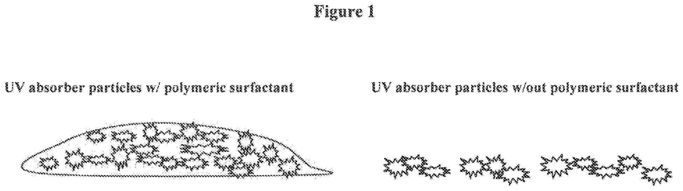

FIGURE 1 shows comparative images of a UV absorbing compound with and without surfactant.

### DETAILED DESCRIPTION

Described herein is a method for combining a UV absorbent compound with a known bird repellent compound to enhance the visual effects of the UV absorption characteristics of the UV absorbent compound whereby surprising and synergistic repellent effects result when the UV absorbent compound is combined with bird repellent compounds.

Described herein is the use of light absorbing compounds such as TiO₂ in the UV range and others either alone or in combination to take advantage of reflectance, refractance and light scattering as it relates to bird vision and food cueing behavior.

Described herein is a method of enhancing bird repellency comprising using a visual cue agent and a bird repellent in synergistic amounts to enhance bird repellency.

The methods and compositions of the present disclosure are effective for repelling a variety of birds from any target (*i.e*., food or place) of interest. The present disclosure can be used for repelling wild birds, including but not limited to, blackbird species (*Icteridae*), red-winged blackbirds (*Agelaius phoeniceus*), grackles *(Quiscalus spp*.), yellow-headed blackbirds (*Xanthocephalus xanthocephalus*), brown-headed cowbirds (*Molothrus ater*), starlings, including European starlings (*Sturnus vulgaris*), geese, including Canada geese (*Branta canadensis*), cackling geese (*B. hutchinsii*) and snow geese (*Chen caerulescens*), crows, cranes, swans, pheasants, wild turkeys, pigeons, sparrows, woodpeckers, larks, robins, finches and waxwings.

Bird repellent agents which are described herein, can be those that are efficacious as primary and/or secondary repellent. Primary repellents possess a quality (e.g., unpalatable taste, odor, irritation) that evokes reflexive withdrawal or escape behavior in an animal. In contrast, secondary repellents evoke an adverse physiological effect (e.g., illness, pain), which in turn is associated with a subsequently-avoided sensory stimulus (e.g., taste, odor, visual cue).

A variety of bird repellents have been previously described and are given herein for reference, these include, but are not limited to, anthraquinones, athrahydroquinones, flutolanil, benzoquinones, anthranilates (including methyl and dimethyl anthranilate), methiocarb, caffeine, chlorpyrifos, (plus -cyhalothrin), methyl phenyl acetate, ethyl phenyl acetate, *o*-amino acetophenone, 2-amino-4,5-dimethyl acetophenone, veratryl amine, cinnamic aldehyde, cinnamic acid, cinnamide and chitosan. These agents may be used alone or in combination. Similarly, the techniques for application of these agents are also well-known and have been described, including formulations, application rates, and application techniques. *See*, for example, Hermann (U.S. patent no. 3,941,887) describing the use of anthraquinones; Wilson (published U.S. application 2007/0178127 A1) describing the use of flutolanil; Kare (U.S. patent no. 2,967,128) and Mason (U.S. patent no. 4,790,990) describing the use of anthranilates and esters of phenyl acetic acid, Crocker and Perry (1990, *ibid*) describing the use of cinnamide, Schafer *et al.* (1983, *ibid*) and Werner et al. (2005, Caffeine Formulation for Avian Repellency. J Wildlife Management, 71:1676-1681) describing the use of caffeine and caffeine plus benzoate, respectively, and Preiser (U.S. patent no. 5,549,902) describing the use of any of anthranilates, methyl phenyl acetate, ethyl phenyl acetate, *o*-amino acerophenone, 2-amino-4,5-dimethyl ecetophenone, veratroyl amine, cinnamic aldehyde, cinnamic acid or cinnamide. Many formulations of these repellents are also available commercially, including, but not limited to, 9,10-anthraquinone (Avipel^{®}, Flight Control Plus^{®}, AV-1011, AV-2022, AV-4044 by Arkion Life Sciences, New Castle, DE), flutolanil (GWN-4770 and GWN-4771, marketed by the Gowan Company, Yuma, AZ), methyl anthranilate (Bird Shield^{®}, marketed by the Bird Shield repellent Corp., Spokane, WA), methiocarb (MESUROL^{®}, marketed by the Gowan Company, Yuma, AZ), caffeine (Flavine North America, Inc., Closter, NJ), and chlorpyrifos plus gamma-cyhalothrin (Cobalt), marketed by Dow AgroSciences, Indianapolis, IN).

As noted hereinabove, suitable visual cue agents, given here for example, can exhibit spectral characteristics sufficiently similar to the previously-applied repellent treatment that the birds of interest do not visually differentiate between the visual cue agent and the bird repellent agent or the first treatment formulation containing the repellent agent. For example, by way of illustration, the known bird repellents anthraquinone, flutolanil, anthranilate, methiocarb, caffeine, and chlorpyrifos plus gamma-cyhalothrin all exhibit UV-A (320-400 nm) and/or UV-B (280-320 nm) absorbance. Thus, suitable visual cue agents should exhibit ultraviolet absorbance at or sufficiently near these wavelengths. A variety of visual cue agents are described herein, for example, and may be identified by determining the UV absorption spectra of the bird repellent agent of interest (or the formulation of the first treatment in which the repellent agent is applied) and the candidate UV absorbing compounds or agents and selecting a visual cue agents those UV absorbing agents which possess a UV absorbance spectrum or color that is substantially the same as that of the bird repellent agent or the first treatment. The UV absorption spectra of other bird repellent agents and visual cue agents may be readily determined using conventional spectroscopic analysis techniques. Although the visual cue agent may itself be effective as a repellent, typically, the visual cue agents will exhibit no statistically significant level of repelling or attracting unconditioned birds when used alone. Visual cue agents described herein, for example, include, titanium (IV) oxides (TiO₂), trisiloxanes, siloxanes, UV-B absorbent agents, UV-A absorbent agents, CaCO₃, MgCO₃, Carbon Black, ZnO or combinations thereof.

For example and in general, the amount of the bird repellent agent used may vary from the initial to the subsequent applications. In the initial application (as well as any subsequent applications in the absence of visual cue agent), the amount of the repellent agent is selected to effectively repel birds from a treated target (*i.e*., food or place). Thus, as used herein, an "effective amount" is defined as that amount which results in a significant repellence of the birds from a treated target in comparison to an untreated control (target without repellent). The actual effective amount will vary with the particular repellent agent selected, its formulation, the bird pest, the target, and environmental factors, and may be readily determined by routine controlled experimentation. Suitable amounts and formulations are described in the prior art as noted hereinabove, and are also provided by the repellent manufacturers and suppliers. By way of example, in the initial application, a particular amount of anthraquinone (Avipel^{®}, Flight Control Plus^{®}, AV-1011 or AV-2022) can be about, or less than about, 100, 200, 300, 400, 500, 600, 700, 800, 900, 1000, 1100, 1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900 or about 4000 ppm active ingredient (a.i.) for most birds. These amounts can also be used to define a range, such as between about 1000 and about 2000 ppm. For example, the particular amount of anthraquinone can be about 600 ppm a.i. for some birds, such as larks.

For example, a particular amount of flutolanil can be about, or less than about, 500, 1000, 3000, 6000, 9000, 12000, 15000, 18000, 20000, 25000, 30000, 35000, 40000, 45000, or about 50000 ppm. These amounts can also be used to define a range, such as between about 10000 and about 40000 ppm. For example, the particular amount of GWN-4770 can be about 35000 ppm, and of GWN-4771 can be about 15,000 ppm.

For example, a particular amount of anthranilate (Bird Shield^{®}) can be about, or less than about, 1000, 5000, 10000, 20000, 30000, 40000, 50000, 60000, 70000, 80000, 90000 or about 100,000 ppm. These amounts can also be used to define a range, such as between about 10000 and about 80000 ppm.

For example, a particular amount of methiocarb (Mesurol^{®}) can be about, or less than about, 1, 2, 3, 4, 5, 6, 7, 8, 9, 10, 15, 20, 25, 30, 325, 40, 45 or about 50 ppm. These amounts can also be used to define a range, such as between about 2 and about 10 ppm. For example, the particular amount of methiocarb (Mesurol^{®}), e.g., Mesurol^{®} 75-W, can be about 1,250 ppm for blackbirds, or about 30 ppm for larks, or about 15 ppm for robins, starlings, grackles, finches, and waxwings.

For example, a particular amount of caffeine (e.g., 1:1 caffeine plus sodium benzoate) can be about, or less than about, 100, 250, 500, 750, 1000, 1500, 2000, 2500, 3000, 3500, 4000, 4500 or about 5,000 ppm. These amounts can also be used to define a range, such as between about 250 and about 3500 ppm.

For example, a particular amount of chlorpyrifos plus gamma-cyhalothrin (Cobalt) can be about, or less than about, 50, 100, 250, 500, 750, 1000, 1500, 2000, 2500, 3000, 3500, 4000, 4500 or about 5,000 ppm. These amounts can also be used to define a range, such as between about 50 and about 2500 ppm.

For example, it is also understood that while the visual cue agent may be applied with the initial repellent application, its application at this time provides no advantage and may be omitted until the subsequent applications.

For example, in some applications wherein the bird repellent agent is applied in conjunction with the visual cue agent, the amount of the repellent agent can be significantly reduced as discussed herein throughout. These applications can be subsequent to an initial application of the bird repellent alone. The amount of bird repellent agent in one or more of the subsequent applications can be less than about 90%, 85%, 80%, 75%, 70%, 65%, 60%, 55%, 50%, 45%, 40%, 40%, 35%, 30%, 25%, 20%, 15%, 10%, 5%, 2% or about 1% of the initial application amount or the effective deterrent amount. These amounts can also be used to define a range, such about 1% to about 50%. For example, in some applications, suitable amounts of the repellent agent may be between about 2% to about 60% of the amount used in the initial application, or between about 10% to about 60% of the amount used in the initial application, or between about 25% to about 60% of the amount used in the initial application, or between about 40% to about 60% of the amount used in the initial application. The amount of the repellant agent can be greatly reduced, for example, to less than about 10% of the amount used in the initial application, or between 4% to 9%, or between 4% to 7%.

The amount of visual cue agent can vary with the particular visual agent, its formulation, its particle size and the target. By way of example, the amounts of visual agent, e.g., titanium oxide (IV), may vary from about, or greater than, 50, 100, 150, 200, 250, 500, 1000, 1500, 2000, 2500, 3000, 3500, 4000, 4500, 5000, 6000, 7000, 8000, 9000, 10000, 20000, 30000, 40000, 50000, 60000, 70000, 80000, 90000 and about 100000 ppm. These value can also define a range, such as about 3500 to 5000 ppm (e.g., Aeroxide^{®} P25, Evonik Goldschmidt Corp., Hopewell, VA or Catalog no. 232033 available from Aldrich, St. Louis, MO), or 4000 to 7000 (e.g., Catalog no. 808 available from Merck & Co., Whitehouse Station, NJ or Hombikat UV 100 available from Sachtleben, Duisburg, Germany, or Catalog no. 89490 available from Aldrich, St. Louis, MO., or Catalog no. T315-500 available from Fisher Scientific, Pittsburgh, PA).

For example, a particular amount of trisiloxane may be about, or greater than about, 50, 100, 250, 500, 750, 1000, 1500 or about 2000 ppm. These amounts can also be used to define a range, such as between about 50 and about 2000 ppm. For example, a particular amount of siloxane can be about, or greater than about, 500, 750, 1000, 1500, 2000, 3000, 4000, 5000, 6000 or about 7000 ppm. These amounts can also be used to define a range, such as between about 3500 and about 5000 ppm.

The visual cue agent particle size can influence the repellency enhancement. In particular, the reflective or absorptive properties of visual cue compounds having very small particle sizes, and in particular, within the range of about 1 to about 100 nanometers can be effective as a visual mimic for birds. Surprisingly, when the particle size is increased to greater than about 100 nanometers, the synergy is enhanced. In particular, birds seemingly attempt to discern a signal and relate it to food sources. The nanoparticle range of less than 100 nanometers down to 10 nanometers show a synergistic effect. The use of larger than nanometer size particles (e.g., 100 nanometer up to 50 micron) shows an unexpectedly more significant synergistic effect.

In one embodiment, the particle size of the visual cue, e.g., TiO₂, in the compositions of the invention can be about 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 510, 520, 530, 540, 550, 560, 570, 580, 590, 600, 700, 800, 900, or about 1000 nm. In another embodiment, the particle size of the visual cue, e.g., TiO₂, can be about 1 micron, 2, 3, 4, 5, 6, 7, 8, 9, 10, 15, 20, 25, 30, 35, 40, 45, 50, 55, 60, 65, 70, 75, 80, 85, 90, 95, 100, 200, 300, 400 or about 500 microns. These values can also define a range, such as about 1 nm to about 50 nm, about 250 nm to about 500 nm, or about 1 nm to about 500 microns. According to the invention, the visual cue particle size is greater than about 100 nm, 200 nm, 300 nm, 400 nm or about 500 nm.

The bird repellent agent, visual cue agent, or both, can be formulated with a suitable inert carrier as is known in the art. Formulations of the bird repellent agent and the visual cue agent can vary with the particular target and method of application. The agents may, for example, be formulated as solutions, emulsions, emulsifiable concentrates, suspension concentrates, wettable powders, dusts, granules, adherent dusts or granules, and aerosols. In particular, the carrier can be agronomically acceptable and suitable for application onto structures, agricultural fields or crops, seeds, seedlings, orchards, vineyards, livestock feed, fertilizers, pesticides, animal or insect baits, and combinations thereof. The particular carrier can be a liquid or solid phase carrier, including but not limited to water, aqueous surfactant mixtures, alcohols, ethers, hydrocarbons, halogenated hydrocarbons, glycols, ketones, esters, oils (natural or synthetic), clays, kaolinite, silicas, cellulose, rubber, talc, vermiculate, and synthetic polymers. The bird repellent agent and the visual cue agent can also be formulated in a single composition or formulated in different compositions and applied separately. The repellent agent and/or the visual cue agent can also be formulated in admixture with other agriculturally beneficial agents, including but not limited to, ultraviolet stabilizers, antioxidants, baits, adjuvants, herbicidal agents, fertilizers, and pesticides including insecticides and fungicides.

In one embodiment, the present disclosure can be used to repel birds anywhere they pose a nuisance or, more importantly, to prevent or minimize economic damage, particularly to agricultural products. The repellent agent and the visual cue agent can be applied on any target or spatial location of concern from which birds are to be repelled. Particular targets include, but are not limited to, one or more of structures, agricultural fields or crops, seeds, seedlings, orchards, vineyards, livestock feed, fertilizers, pesticides, animal or insect baits, and combinations thereof. Crops include, but are not limited to, one or more of corn, fruit, grains, grasses, legumes, lettuce, millet, oats, rice, row crops, sorghum, sunflower, tree nuts, turf, vegetables, and wheat.

The subsequent treatments of the target with the repellent agent and the visual cue agent are typically applied at any time following the initial application as desired by the user. For instance, in one embodiment, subsequent treatments can be applied when the efficacy of the initial application is reduced or significantly reduced, or during periods wherein heavier bird damage is anticipated. In practice, the subsequent treatment is typically applied at least one week after the first treatment (in the same growing season).

The methods and compositions of the present disclosure can also contain one or more adjuvants, such as those routinely used in agriculture to adhere compounds to the surface of plant material. The inclusion of one or more adjuvants may also be effective in enhancing the UV absorbance of colorants and pigments. Such enhancements can be accomplished by placing the particles of the UV absorbent materials in an adjuvant layer with enough depth to allow overlapping of the particles. For example, a droplet of polymeric adjuvant providing a matrix such as the diagram below compared to the pigment or colorant residing in a flat aspect on the leaf, the UV absorbance can be improved.

Another variable affecting UV absorbance, and ultimately repellency, in the matrix relates to the preparation of the formulation. For example, a visual cue slurry, e.g., a TiO₂ slurry, and/or an AQ slurry can be formed that can then be mixed together. The separate manufacturing or preparation of the non-soluble crystals can allow addition and/or separate steps of reducing agglomeration. Agglomeration is a common condition for both AQ and visual cues, such as TiO₂. Agglomerates are particularly difficult to break apart and should be removed to maintain the specific particle size of the components.

### EXAMPLES

### Example 1

### General Methods

Feeding experiments were conducted at the National Wildlife Research Center (NWRC) outdoor animal research facility in Ft. Collins, CO. 121 live-captured red-winged blackbirds (RWBL) were obtained and all elements of the experiments were approved by the NWRC Animal Care and Use Committee (NWRC Study Protocol QA-1968;S.J.Werner-Study Director).

Blackbirds were maintained in a 4.9 x 2.4 x 2.4 meter cages within a wire mesh sided building for at least 2 weeks prior to the experiments. Free access to grit and a maintenance diet was provided to all birds during quarantine and holding. The maintenance diet included two parts millet: one cracked corn: one milo: one safflower. Blackbird feeding experiments were conducted in visually isolated individual cages (0.9 x 1.8 x 0.9 meters) within a wire mesh sided building. Water was provided ad libitum to all birds throughout the experiments.

An anthraquinone based bird repellent (50% AQ in aqueous formulation), titanium dioxide (28 nm average particle size as a powder) and a red feeding cue (red#40, FC&C aluminum lake dispersion) were used for the feeding experiments. A Genesys 2, 336002 spectrophotometer (Thermo Spectronic US, Rochester NY) was used to determine that both the AQ repellent and the titanium dioxide feeding cue absorb light in the near UV wavelengths (280-350 nm). Seed treatments for all experiments were formulated by applying aqueous suspensions (60 mL/kg) to whole oilseed sunflower using a rotating mixer and household spray equipment.

A baseline preference feeding experiment was conducted to evaluate blackbird consumption of untreated sunflower seeds versus those treated with the UV feeding cue and to identify a numerically preferred concentration of the UV feeding cue for our subsequent feeding experiments.

Daily sunflower consumption was measured throughout the preference experiment (test days 1-4). Unconsumed sunflower seeds that remained in each food bowl and spillage were collected and weighed daily. Weight change (e.g. dessication) of sunflower seeds was measured daily by weighing seeds offered within a vacant cage throughout the preference experiment.

Eleven red-winged blackbirds (experimentally naive) were randomly assigned to the baseline preference experiment. All blackbirds were offered untreated sunflower seed ad libitum in two food bowls for 5 days of acclimation in individual cages. Each blackbird was subsequently offered one bowl of untreated sunflower and one bowl of sunflower treated with 0.2% titanium dioxide feeding cue (wt/wt) at 0800 h daily throughout the 4 day test. The north-south placement of food bowls was randomized on the first day and alternated on subsequent days of the trial.

The dependent measure for the baseline preference experiment was average test consumption of treated and untreated sunflower seeds. The treatment effect was analyzed using a mixed model (SAS v9.1). Descriptive statistics were used to summarize consumption of treated and untreated seeds throughout the preference experiment.

Relative to average consumption of untreated sunflower, blackbirds non-significantly preferred sunflower treated with 0.2% of the titanium dioxide UV feeding cue (F1,10=2.15, P=0.1732). Blackbirds consumed an average of 3.3 ± 0.4 g of treated sunflower and 2.5 ± 0.3 g of untreated sunflower during the 4 day experiment. The UV feeding cue was not itself aversive to the birds.

The concentration response of AQ plus TiO₂ feeding cue was tested. This experiment was designed to establish a concentration response relationship of AQ plus 0.2% TiO₂ treated sunflower seeds for blackbirds in captivity. The experiment was also designed to establish a threshold concentration of AQ necessary for blackbird feeding repellency when reduced by varying the concentration of AQ based repellent combined with a TiO₂ feeding cue. This optimized AQ concentration was expected to be less than the threshold AQ concentration previously established for red-winged blackbirds done by Werner et al. (2009) and shown in column 2 of Table 1. Daily sunflower consumption was measured throughout the pretreatment and test phases of the experiment as previously described. Greater than 80% repellency during a captive feeding trial is the operational level for an effective repellent as has been documented in the field using AQ repellents, see Werner et al. (2009) and (2011).

Materials and Methods: Fifty five red-winged blackbirds (experimentally naive) were offered untreated sunflower seed ad libitum in one food bowl for 5 days of acclimation in individual cages. Each blackbird was subsequently offered 30 g of untreated sunflower seeds in one bowl during each of study days 1,2, and 3. Blackbirds were ranked based upon average pretreatment consumption and assigned to one of 6 treatment groups (n=9 to 10 birds per group) such that each group was similarly populated with birds that exhibited high-low daily consumption.

Subsequent to the pretreatment, treatments were randomly assigned among groups (0.02%, 0.035%, 0.05%, 0.1%, 0.25% and 0.5% AQ; targeted concentrations wt/wt). Each of these seed treatments also included 0.2% of the TiO₂ feeding cue. 30 grams of treated sunflower seeds in one bowl to all birds on study day 4 and determined the combined mass (± 0.1 g) of uneaten seeds and seed spillage at 0800 h on study day 5.

The results of this experiment are shown in column 3 of Table 1. A positive concentration-response relationship was observed with varying concentrations of the AQ plus TiO₂ feeding cue. A synergistic effect was observed as reflected in the fact that the expected AQ concentration for 80% repellency was 1737 ppm AQ and with the mixture of AQ and TiO₂, the result was 1481, a 15% improvement as measured by the lower amount of AQ needed to repel the birds.

The experiment was repeated using larger particle size TiO₂. The same materials and methods were replicated except for the type of TiO₂ used in the seed preparation. Instead of the nanoparticle TiO₂ (28 nm average particle size) a pigment grade TiO₂ (385 nm average particle size, DuPont RPS Vantage) was used. The amount of TiO₂ (385 nm) used was the same as the nanoparticle TiO₂ (28 nm). The bird testing was conducted in the same manner, as well.

The results of this experiment are shown in column 4 of Table 1. An enhanced synergistic effect was observed using a larger particle size TiO₂. The 80% repellency for straight AQ required 1737 ppm AQ. The 80% repellency for AQ + nanoparticle TiO₂ required 1481 ppm (15% improvement). The 80% repellency for AQ + pigment grade TiO₂ required only between 1049 and 1247 ppm (28% to 40% improvement). The synergistic advantage was observed for both visual cues, and more significantly with the larger particle size visual cue.

**Table 1**

| RWBL Repellency (%) | Anthraquinone Only [AQ] ppm by weight | TiO₂ (28 nm) and AQ (10:1 ratio) [AQ] ppm by weight | TiO₂ (385 nm) and AQ (10:1 ratio) [AQ] ppm by weight |
|---|---|---|---|
| 20 | 193 (222*20/23) | | |
| 35 | 572 (556*34/35) | | 337 (325*36.3/35) |
| 50 | 538 (560*50/52) | 163 (166*49/50) | |
| | | 218 (272*49/50) | |
| | | 281 (299*47/50) | |
| 70 | 1682 (1778*74/70) | 752 (677*63/70) | 567 (585*70/72.2) |
| | | | 701 (780*70/77.8) |
| 80 | 1737 ((1846-1682)*1/3)+1682 | 1481 (1370*74/80) | 1049 (1040*79.3/80) |
| | | | 1247 (1300*80/83.4) |
| 100 | 1846 (1994*100/108) | 2270 | |

As shown above, and as is generally known, TiO₂ is not a repellent in any nominal concentration. TiO₂ may be a slight bird attractant, *see* U.S. Provisional Application No. 62/021,393, lines 147-184. It is only when TiO₂ is mixed with the known bird repellent, e.g., AQ, can there be a repellency effect. It is believed that the repellency effect is further affected by the following parameters: matrix effects, particle size, refractive index of the pigment and source of TiO₂ (e.g., rutile, anatase).

### Example 2

TiO₂ particle characteristics were studied to determine what influence particle size had on repellency enhancement. Refraction of UV light in the range that birds can detect requires particle sizes approximately ½ of the wavelength of the light range. For example, to refract light in the 400 micron range requires particles of about 0.2 nm (e.g., 200 micron) average size. The reflective or absorptive properties of these TiO₂ particles may also be important to birds because recognition and ultimately repellency may not be as simple as adding a colorant or pigment to a plastic matrix. Instead, birds can visually discern greater detail and relate the visual signal to food sources. With this in mind, various particle characteristics were tested to evaluate this effect on repellency.

Feeding repellency was tested among red-winged blackbirds offered varying compositions of a visual cue-enhanced bird repellent. The bird repellent was 0.0325% anthraquinone (Avipel^{®}; Arkion Life Sciences, New Castle, DE). The visual cues were pigment-grade titanium dioxides, e.g., particles having over about 100, 200 or 300 nm sizes.

Both rutile TiO₂ and anatase TiO₂ were tested as visual cues. Both contained an average particle size of over 300 nm. As described above, a controlled feeding experiment was conducted with red-winged blackbirds to comparatively evaluate 1:1 to 2.5:1 ratios of TiO₂ to anthraquinone. The results are shown in Table 2.

**Table 2**

| | **Repellent Efficacy** | |
|---|---|---|
| TiO₂ : AQ | Rutile TiO₂ | Anatase TiO₂ |
| | Ranked Performance (best = 1) | Ranked Performance (best = 1) |
| 1.0 : 1 | 6 | 3 |
| 1.3 : 1 | 5 | 4 |
| 1.6 : 1 | 2 | 2 |
| 1.9 : 1 | 4 | **1** |
| 2.2 : 1 | 3 | 5 |
| 2.5 : 1 | **1** | 6 |

| | Repellencv | Repellencv |
|---|---|---|
| 1.9 : 1 | | **1.5%** |
| 2.5 : 1 | **35.3%** | |

For rutile and anatase TiO₂, it was observed that the greatest feeding repellency occurred at the 2.5:1 and 1.9:1 ratios, respectively. Another controlled feeding experiment was conducted with experimentally naive blackbirds. It was observed that 2.5 parts rutile TiO₂ and 1 part anthraquinone exhibited a 35.3% repellency. It was also observed that 1.9 parts anatase TiO₂ and 1 part anthraquinone exhibited a 1.5% feeding repellency. The greatest relative repellent efficacy was observed for 2.5 parts rutile TiO₂ and 1 part anthraquinone.

For example, the ratio of visual cue to bird repellent can be about 1.5:1, 1.6:1, 1.7:1, 1.8:1, 1.9:1, 2:1:1, 2.2:1, 2.3:1, 2.4:1, 2.5:1, 2.6:1, 2.7:1, 2.8:1, 2.9:1, or about 3.0:1. These values can also define a range, such as about 1.5:1 to about 3.0:1.

In one embodiment, the visual cue agent can be a rutile pigment grade. Rutile pigment grade material have a unique crystal structure, uniform particle size and higher refractive index. Better UV absorbance can improve the ability of birds to identify the presence of a UV absorbing bird repellent in combination with a mimic (e.g., TiO₂). The results show that there is a clear repellency advantage to using rutile TiO₂ pigment grade of 385 nanometer average particle size in combination with a UV absorbent bird repellent.

### Example 3

The effect of including an adjuvant in the formulation was tested. Feeding repellency was tested among red-winged blackbirds offered varying compositions of a visual cue-enhanced bird repellent. The bird repellent was 0.0325% anthraquinone (Avipel^{®}; Arkion Life Sciences, New Castle, DE). The compositions were formulated with 2.5 parts rutile TiO₂ and 1 part anthraquinone, with and without a polymeric adjuvant (polyethylene glycol). The results are shown in Table 3.

**Table 3**

| | **Repellent Efficacy** | |
|---|---|---|
| | **Avipel**^{®} | Technical Anthraquinone |
| With Polymeric Adjuvant | **32.3%** | -2.5% |
| Without Polymeric Adjuvant | 23.0% | 0.4% |

The greatest relative repellency was observed for 2.5 parts rutile TiO₂ and 1 part anthraquinone (Avipel^{®}) with the polymeric adjuvant. For example, the composition can contain about 10, 15, 20, 25, 30, 35, 40, 45, 50, 55, 60, 65, 70, 75, 80, 85, 90, or about 95 wt% polymeric adjuvant. These values can also define a range, such as about 50 to about 80 wt % polymeric adjuvant.

### Example 4

For example, the effect of other visual cues, such as pigments, in the formulation were tested, examples outside the scope of the claims are included for reference purposes only (MgCO₃, ZnO and Carbon Black). Feeding repellency was tested among red-winged blackbirds offered varying compositions of a visual cue-enhanced bird repellent. The bird repellent was 0.0325% anthraquinone (Avipel^{®}; Arkion Life Sciences, New Castle, DE). The visual cues were magnesium carbonate, zinc oxide, calcium carbonate and carbon black.

For each of magnesium carbonate, zinc oxide, calcium carbonate and carbon black as visual cues, the feeding experiments comparatively evaluated 1:1 to 2.5:1 ratios of rutile TiO₂ to anthraquinone. The results are shown in Table 4.

**Table 4**

| | **Repellent Efficacy** | | | |
|---|---|---|---|---|
| Cue:AQ | MgCO₃ | ZnO | CaCO₃ | Carbon Black |
| | Ranked Performance | Ranked Performance | Ranked Performance | Ranked Performance |
| | (best = 1) | (best = 1) | (best = 1) | (best = 1) |
| 1.0 : 1 | **1** | 6 | **1** | 6 |
| 1.3 : 1 | 6 | 5 | 2 | 2 |
| 1.6 : 1 | 2 | 2 | 3 | **1** |
| 1.9 : 1 | 5 | 4 | 6 | 4 |
| 2.2 : 1 | 3 | **1** | 5 | 3 |
| 2.5 : 1 | 4 | 3 | 4 | 5 |

| | Repellency | Repellency | Repellency | Repellency |
|---|---|---|---|---|
| 1.0 : 1 | 22.2% | | 28.3% | |
| 1.6 : 1 | | | | **29.5%** |
| 2.2 : 1 | | 26.0% | | |

The greatest feeding repellency was observed at 1:1 (MgCO₃), 2.2:1 (ZnO), 1:1 (CaCO₃) and 1.6:1 (carbon black) ratios. The greatest relative repellency was observed for 1.6 parts carbon black and 2 part anthraquinone. Another controlled feeding experiment was conducted with experimentally naive blackbirds. Relative repellency values observed for MgCO₃ was 22.2%, for ZnO was 26.0%, for CaCO₃ was 28.3%, for carbon black was 29.5%.

## Claims

1. A composition comprising a visual cue agent and a bird repellent, wherein the visual cue agent comprises rutile TiO₂, CaCO₃, or a combination thereof; and the bird repellent is anthraquinone;
**characterised in that** the particle size of the visual cue agent is greater than about 100 nm; and the ratio of visual cue agent to bird repellent is within the range of 1.5:1 to 3:1.

2. The composition of claim 1 wherein the composition further comprises about 50 wt% to about 90 wt% polymeric adjuvant.

3. Use of a composition according to claim 1 or claim 2 in a method of enhancing bird repellency.

## Patentansprüche

1. Zusammensetzung, die ein visuelles Referenzpunkt-Mittel und ein Vogelabwehr-Mittel umfasst, wobei das visuelle Referenzpunkt-Mittel Rutil-TiO₂, CaCO₃ oder eine Kombination davon umfasst; und wobei das Vogelabwehr-Mittel Antrachinon ist;
**dadurch gekennzeichnet, dass** die Teilchengröße des visuellen Referenzpunkt-Mittels größer als etwa 100 nm ist; und das Verhältnis zwischen dem visuellen Referenzpunkt-Mittel und dem Vogelabwehr-Mittel im Bereich von 1,5:1 bis 3:1 liegt.

2. Zusammensetzung nach Anspruch 1, wobei die Zusammensetzung weiters etwa 50 Gew.-% bis etwa 90 Gew.-% eines polymeren Hilfsmittels umfasst.

3. Verwendung einer Zusammensetzung nach Anspruch 1 oder Anspruch 2 in einem Verfahren zum Verbessern der Vogelabwehr.

## Revendications

1. Composition comprenant un agent de repère visuel et un répulsif pour oiseaux, dans laquelle l'agent de repère visuel comprend du rutile TiO₂, du CaCO₃, ou une combinaison de ceux-ci ; et le répulsif pour oiseaux est une anthraquinone ;
**caractérisé en ce que** la taille de particule de l'agent de repère visuel est supérieure à environ 100 nm ; et le rapport de l'agent de repère visuel à l'agent répulsif pour oiseaux est dans la plage allant de 1,5:1 à 3:1.

2. Composition selon la revendication 1, dans laquelle la composition comprend en outre environ 50 % en poids à environ 90 % en poids d'adjuvant polymère.

3. Utilisation d'une composition selon la revendication 1 ou la revendication 2 dans un procédé d'amélioration de la répulsion des oiseaux.
